# EUROPEAN PATENT APPLICATION

(11) **EP 4 825 889 A1**
(43) Date of publication of application: **21.10.2026**
(21) Application number: 24903624.5
(22) Date of filing: 06.12.2024
(51) Int. Cl.: C08F 220/58, C08F 220/26, C08F 230/02, C08L 33/26, C08L 101/12, C09D 133/00

(54) **COPOLYMER, METHOD FOR PRODUCING SAME, APPLICATION OF SAME, COPOLYMER-CONTAINING COMPOSITE PARTICLE, AND DISPERSION THEREOF**

(30) Priority: 11.12.2023 JP 2023208337
(71) Applicant: Sekisui Kasei Co., Ltd., Kita-ku Osaka-shi Osaka 530-8565 (JP)
(72) Inventor: KUDO, Miho, Osaka-shi, Osaka 530-8565 (JP); OUCHI, Takuto, Osaka-shi, Osaka 530-8565 (JP)
(74) Representative: Hoffmann Eitle
(86) International application number: PCT/JP2024/043201
(87) International publication number: WO 2025/126969

(57) **Abstract**

The present disclosure provides a copolymer which exhibits excellent dispersibility and sufficient solubility in water. Specifically, the present disclosure provides a copolymer having a structural unit (A) derived from a monomer (a) having a hydrophilic group (excluding a catechol group) and a structural unit (B) derived from a monomer (b) having a catechol group, wherein the hydrophilic group is a hydroxyl group and/or a phosphate group, and the mass average molecular weight is 500 or more and 20,000 or less.

## Description

### [Technical Field]

The present disclosure relates to a copolymer, a method of producing the same, an application thereof, and a composite particle containing a copolymer and a dispersion thereof.

### [Background Art]

Conventionally, various proposals have been made for dispersing polytetrafluoroethylene (PTFE) particles, inorganic particles and the like in an aqueous solvent.

For example, PTL 1 describes a fluororesin aqueous dispersion containing 1 to 80 mass% of fluororesin particles (for example, PTFE particles) having a volume average particle size Dv of 1 µm to 50 µm after dispersion.

PTL 2 describes a dispersing agent containing a compound having a structural unit (A) having a specific structure and a structural unit (B) derived from at least one monomer (b) selected from the group consisting of a terpene monomer, a vinyl monomer and a conjugated diene monomer.

### [Citation List]

### [Patent Literature]

[PTL 1] Japanese Patent Application Publication No. 2019-052211
[PTL 2] Japanese Patent Application Publication No. 2023-127556

### [Summary of Invention]

### [Technical Problem]

However, the invention described in PTL 1 has problems in terms of bioaccumulation, environmental persistence and the like because a fluorine surfactant is used.

In addition, the invention described in PTL 2 has a problem that the dispersibility of particles in an aqueous solvent is not sufficient because the particles are not soluble in water.

The present disclosure has been made in view of the above circumstances, and an object of the present disclosure is to provide a copolymer which exhibits excellent dispersibility and sufficient solubility in water.

### [Solution to Problem]

In order to achieve the above object, the inventors conducted extensive studies, and as a result, found that the above problems can be solved by using a copolymer formed by polymerizing a monomer having a hydrophilic group (excluding a catechol group) and a monomer having a catechol group. The inventors conducted further studies and completed the present disclosure.

The present disclosure includes, for example, the following items.

Item 1. A copolymer includes a structural unit (A) derived from a monomer (a) having a hydrophilic group (excluding a catechol group) and a structural unit (B) derived from a monomer (b) having a catechol group,
wherein the hydrophilic group is a hydroxyl group and/or a phosphate group, and
the mass average molecular weight is 500 or more and 20,000 or less.

### [Advantageous Effects of Invention]

According to the present disclosure, it is possible to provide a copolymer which exhibits excellent dispersibility and sufficient solubility in water. Because the copolymer of the present disclosure has such excellent properties, it can be suitably used in a wide range of applications such as a dispersing agent, a coating agent, a paint, a lubricating film, and a battery.

### [Description of Embodiments]

Hereinafter, preferable embodiments of the present disclosure will be described in detail. The following components will be described based on representative embodiments and specific examples, but the present disclosure is not limited to such embodiments.

In the present disclosure, the expressions "contain" and "include" include the concepts of "contain," "include," "substantially composed of" and "composed only of."

In the numerical ranges stated stepwise in the present disclosure, the upper limit value or the lower limit value of the numerical range of a certain range can be arbitrarily combined with the upper limit value or the lower limit value of the numerical range in another stage. In addition, in the numerical ranges stated in the present disclosure, the upper limit value or the lower limit value of the numerical range may be replaced with values shown in examples or values that can be uniquely derived from examples.

In the present disclosure, "A and/or B" means "one of A and B" or "both A and B," and specifically, "A," "B," or "A and B."

In the present disclosure, "n-" means "normal," "sec-" means secondary, and "tert-" means "tertiary."

In the present disclosure, "(meth)acrylic" means acrylic or methacrylic, "(meth)acrylate" means acrylate or methacrylate, and "(meth)acryloyl" means acryloyl or methacryloyl.

In the present disclosure, room temperature is a temperature in a range of 20°C to 25°C.

In the present disclosure, the "main chain of a monomer" is a carbon chain having a polymerizable double bond (carbon-carbon double bond). In the present disclosure, the side chain of a monomer is a chain bonded to the main chain of the monomer and having a shorter chain length than the main chain.

In the present disclosure, the content of the structural unit (A) in all structural units of the copolymer can be considered to be equal to the amount of the monomer (a) used with respect to a total amount of monomers used when the copolymer is produced.

In the present disclosure, the content of the structural unit (B) in all structural units of the copolymer can be considered to be equal to the amount of the monomer (b) used with respect to a total amount of monomers used when the copolymer is produced.

In the monomer (a) represented by Formula (1) and the monomer (b) represented by Formula (2) of the present disclosure, examples of linear or branched alkyl groups having 1 to 20 (1, 2, 3, 4, 5, 6, 7, 8, 9, 10, 11, 12, 13, 14, 15, 16, 17, 18, 19 or 20) carbon atoms include a methyl group, an ethyl group, an n-propyl group, an isopropyl group, an n-butyl group, an isobutyl group, a sec-butyl group, a tert-butyl group, an n-pentyl group, an isopentyl group, a neopentyl group, a cyclopentyl group, an n-hexyl group, an n-heptyl group, an n-octyl group, an n-nonyl group, an n-decyl group, an n-undecyl group, an n-dodecyl group, an n-tridecyl group, an n-tetradecyl group, an n-pentadecyl group, an n-hexadecyl group, an n-heptadecyl group, an n-octadecyl group, an n-nonadecyl group, and an n-icosyl group.

In the monomer (a) represented by Formula (1) and the monomer (b) represented by Formula (2) of the present disclosure, examples of linear or branched alkylene groups having 1 to 10 (1, 2, 3, 4, 5, 6, 7, 8, 9 or 10) carbon atoms include a methylene group, an ethylene group, an n-propylene group, an isopropylene group, an n-butylene group, an isobutylene group, a sec-butylene group, a tert-butylene group, an n-pentylene group, an isopentylene group, a neopentylene group, a cyclopentylene group, an n-hexylene group, an n-heptylene group, an n-octylene group, an n-nonylene group, and an n-decylene group.

In the monomer (a) represented by Formula (1) and the monomer (b) represented by Formula (2) of the present disclosure, the linear or branched oxyalkylene group having 1 to 10 (1, 2, 3, 4, 5, 6, 7, 8, 9 or 10) carbon atoms is a group represented by -A-O-, and A is a linear or branched alkylene group having 1 to 10 (1, 2, 3, 4, 5, 6, 7, 8, 9 or 10) carbon atoms.

In the monomer (a) represented by Formula (1) and the monomer (b) represented by Formula (2) of the present disclosure, the alkyl group having 1 to 3 (1, 2 or 3) carbon atoms is a methyl group, an ethyl group, an n-propyl group or an isopropyl group.

In the monomer (a) represented by Formula (1) and the monomer (b) represented by Formula (2) of the present disclosure, the alkylene group having 1 to 3 (1, 2 or 3) carbon atoms is a methylene group, an ethylene group, an n-propylene group or an isopropylene group.

In the monomer (a) represented by Formula (1) and the monomer (b) represented by Formula (2) of the present disclosure, the oxyalkylene group having 1 to 3 (1, 2 or 3) carbon atoms is -CH₂-O-, -CH₂-CH₂-O-, -CH₂-CH₂-CH₂-O- or -CH₂-CH(CH₃)-O-.

### 1. Copolymer

The copolymer of the present disclosure has the following configurations (i), (ii) and (iii):
(i) The copolymer includes a structural unit (A) derived from a monomer (a) having a hydrophilic group (excluding a catechol group) and a structural unit (B) derived from a monomer (b) having a catechol group.
(ii) The hydrophilic group is a hydroxyl group (-OH) and/or phosphate group (-O-P(=O)(OH)₂).
(iii) The mass average molecular weight is 500 or more and 20,000 or less.

When the copolymer of the present disclosure has the above configurations (i), (ii) and (iii), it has favorable hydrophilicity. In addition, since the copolymer of the present disclosure has excellent dispersibility, it can be used as a dispersing agent.

In the configuration (ii), the hydroxyl group does not include a hydroxyl group in a carboxy group (-COOH).

In the configuration (ii), the number of hydroxyl groups is preferably 1 or 2, and the number of phosphate groups is preferably 1.

Hereinafter, the "monomer (a) having a hydrophilic group (excluding a catechol group)" will be simply referred to as a "monomer (a)," and the "monomer (b) having a catechol group" will be simply referred to as a "monomer (b)."

In the present disclosure, the hydrophilic group of the monomer (a) does not have a catechol group. In the present disclosure, the hydrophilic group of the monomer (a) is preferably a hydroxyl group or a phosphate group. In the present disclosure, the hydrophilic group of the monomer (a) more preferably has one or two hydroxyl groups or one phosphate group.

In the present disclosure, the monomer (a) preferably has a hydrophilic group at the end of the side chain in order to achieve better hydrophilicity. In the present disclosure, when the monomer (a) has a hydrophilic group at the end of the side chain, the number of hydrophilic groups is preferably 1 or 2. Here, the hydrophilic group at the "end of the side chain" is a hydrophilic group located at the position farthest from the main chain of the monomer (a).

In the present disclosure, the monomer (a) generally has one or more and four or less radically polymerizable unsaturated groups, preferably has one or more and three or less radically polymerizable unsaturated groups, more preferably has one or two radically polymerizable unsaturated groups, and particularly preferably has one radically polymerizable unsaturated group.

In one embodiment of the present disclosure, it is preferable that the monomer (a) not include a terpene monomer or a conjugated diene monomer, and it is more preferable that the monomer (a) include neither a terpene monomer nor a conjugated diene monomer.

In one embodiment of the present disclosure, the content of the structural unit derived from the terpene monomer or the structural unit derived from the conjugated diene monomer in the copolymer is preferably 5 mass% or less, more preferably 1 mass% or less, still more preferably 0.5 mass% or less, and yet more preferably 0.1 mass% or less.

The radically polymerizable unsaturated group is preferably a group having a carbon-carbon double bond. Examples of radically polymerizable unsaturated groups include an acryloyl group (CH₂=CH(CO)-), a methacryloyl group (CH₂=CCH₃(CO)-), a styryl group (C₆H₅CH=CH-), and an allyl group (CH₂=CH-CH₂-). Among these, an acryloyl group or a methacryloyl group is preferable, and an acryloyl group is more preferable. These groups having a carbon-carbon double bond may further have a substituent as long as radical polymerization is not inhibited. Examples of substituents include a halogen atom (a fluorine atom, a chlorine atom, a bromine atom or an iodine atom).

In the present disclosure, the monomer (b) generally has one or more and four or less radically polymerizable unsaturated groups, preferably has one or more and three or less radically polymerizable unsaturated groups, more preferably has one or two radically polymerizable unsaturated groups, and particularly preferably has one radically polymerizable unsaturated group.

The radically polymerizable unsaturated group is preferably a group having a carbon-carbon double bond. Examples of radically polymerizable unsaturated groups include an acryloyl group (CH₂=CH(CO)-), a methacryloyl group (CH₂=CCH₃(CO)-), a styryl group (C₆H₅CH=CH-), and an allyl group (CH₂=CH-CH₂-). Among these, an acryloyl group or a methacryloyl group is preferable, and a methacryloyl group is more preferable. These groups having a carbon-carbon double bond may further have a substituent as long as radical polymerization is not inhibited. Examples of substituents include a halogen atom (a fluorine atom, a chlorine atom, a bromine atom or an iodine atom).

The copolymer of the present disclosure has a mass average molecular weight of 500 or more and 20,000 or less. When the mass average molecular weight is more than 20,000, the solubility in water is significantly reduced. When the mass average molecular weight is less than 500, the copolymer may become a homopolymer of the monomer (a) or a homopolymer of the monomer (b). The "homopolymer of the monomer (a)" is a polymer in which the content of the structural unit (A) derived from the monomer (a) is 100 mass%. The "homopolymer of the monomer (b)" is a polymer in which the content of the structural unit (B) derived from the monomer (b) is 100 mass%.

The copolymer of the present disclosure has a mass average molecular weight of 500 or more and 20,000 or less. In a preferable embodiment of the present disclosure, the upper limit value of the mass average molecular weight of the copolymer of the present disclosure may be a value of 19,000, 18,000, 17,000, 16,000, 15,000, 14,000 and 13,000, the lower limit value of the mass average molecular weight thereof may be a value of 750, 1,000, 1,250, 1,500, 1,750, 2,000, 2,250, 2,500, 2,750, 3,000 and 3,250, and these upper limit values and lower limit values can be arbitrarily combined.

The number average molecular weight (Mn) of the copolymer of the present disclosure is preferably 500 or more and 20,000 or less, the upper limit value of Mn may be a value of 15,000, 12,500, 10,000, 9,500, 9,000, 8,750, 8,500 and 8,250, the lower limit value of Mn may be a value of 750, 1,000, 1,250, 1,500, 1,750 and 2,000, and these upper limit values and lower limit values can be arbitrarily combined.

The specific methods of measuring the mass average molecular weight and Mn will be described with reference to examples described below.

In one embodiment of the present disclosure, the total content of the structural unit (A) derived from the monomer (a) and the structural unit (B) derived from the monomer (b) with respect to a total amount (100 mass%) of all structural units in the copolymer is preferably in the order of more than 50 mass%, 55 mass% or more, 60 mass% or more, 65 mass% or more, 70 mass% or more, 75 mass% or more, 80 mass% or more, 83 mass% or more, 85 mass% or more, 88 mass% or more, 90 mass% or more, 91 mass% or more, 91.5 mass% or more, 92 mass% or more, 92.5 mass% or more, 93 mass% or more, 93.5 mass% or more, 94 mass% or more, 94.5 mass% or more, 95 mass% or more, 95.5 mass% or more and 96 mass% or more.

In one embodiment of the present disclosure, it is particularly preferable that the copolymer of the present disclosure be composed of the structural unit (A) derived from the monomer (a) and the structural unit (B) derived from the monomer (b). However, even when the copolymer is composed of only the structural unit (A) derived from the monomer (a) and the structural unit (B) derived from the monomer (b), the inclusion of inevitable impurities (for example, trace amounts of a solvent and the like remaining after purification during the copolymer production process) of the structural unit (A) derived from the monomer (a) and the structural unit (B) derived from the monomer (b) is acceptable.

In the present disclosure, in order for the copolymer to have better hydrophilicity, the content of the structural unit (B) derived from the monomer (b) with respect to a total molar amount (100 mol%) of the structural unit (A) derived from the monomer (a) and the structural unit (B) derived from the monomer (b) is preferably 1 mol% or more and 50 mol% or less, more preferably 1.5 mol% or more and 40 mol% or less, still more preferably 2 mol% or more and 30 mol% or less, and yet more preferably 2.5 mol% or more and 25 mol% or less.

In a preferable embodiment of the present disclosure, with respect to a total molar amount (100 mol%) of the structural unit (A) derived from the monomer (a) and the structural unit (B) derived from the monomer (b), the upper limit value of the content of the structural unit (B) derived from the monomer (b) may be a value of 50 mol%, 45 mol%, 40 mol%, 35 mol%, 30 mol%, 29 mol%, 28 mol%, 27 mol%, 26 mol%, 25 mol%, 24 mol%, 23 mol%, 22 mol% and 21 mol%, the lower limit value of the content of the structural unit (B) derived from the monomer (b) may be a value of 1 mol%, 1.5 mol%, 2 mol%, 2.5 mol%, 3 mol%, 3.5 mol%, 4 mol%, 4.5 mol%, 5 mol%, 5.5 mol%, 6 mol%, 6.5 mol%, 7 mol%, 7.5 mol%, 8 mol%, 8.5 mol%, 9 mol%, 9.5 mol% and 10 mol%, and these upper limit values and lower limit values can be arbitrarily combined.

In the present disclosure, in order for the copolymer to have better hydrophilicity, the content of the structural unit (A) derived from the monomer (a) with respect to a total molar amount (100 mol%) of the structural unit (A) derived from the monomer (a) and the structural unit (B) derived from the monomer (b) is preferably 50 mol% or more and 99 mol% or less, more preferably 60 mol% or more and 98.5 mol% or less, still more preferably 70 mol% or more and 98 mol% or less, and yet more preferably 75 mol% or more and 97.5 mol% or less.

In a preferable embodiment of the present disclosure, with respect to a total molar amount (100 mol%) of the structural unit (A) derived from the monomer (a) and the structural unit (B) derived from the monomer (b), the upper limit value of the content of the structural unit (A) derived from the monomer (a) may be a value of 99 mol%, 98.5 mol%, 98 mol%, 97.5 mol%, 97 mol%, 96 mol%, 95 mol%, 94.5 mol%, 94 mol%, 93.5 mol%, 93 mol%, 92.5 mol%, 92 mol%, 91.5 mol%, 91 mol%, 90.5 mol% and 90 mol%, the lower limit value of the content of the structural unit (A) derived from the monomer (a) may be a value of 50 mol%, 55 mol%, 60 mol%, 65 mol%, 70 mol%, 71 mol%, 72 mol%, 73 mol%, 74 mol% and 75 mol%, and these upper limit values and lower limit values can be arbitrarily combined.

In the present disclosure, in order for the copolymer to have better hydrophilicity, the content of the structural unit (A) derived from the monomer (a) with respect to a total amount (100 mass%) of all structural units in the copolymer is preferably 55 mass% or more and 99 mass% or less, more preferably 60 mass% or more and 98 mass% or less, still more preferably 65 mass% or more and 97 mass% or less, yet more preferably 70 mass% or more and 96 mass% or less, and particularly preferably 75 mass% or more and 95.5 mass% or less.

In a preferable embodiment of the present disclosure, with respect to a total amount (100 mass%) of all structural units in the copolymer, the upper limit value of the content of the structural unit (A) derived from the monomer (a) may be a value of 99.5 mass%, 99 mass%, 98.5 mass%, 98 mass%, 97.5 mass%, 97 mass%, 96.5 mass%, 96 mass% and 95.5 mass%, the lower limit value of the content of the structural unit (A) derived from the monomer (a) may be a value of 55 mass%, 60 mass%, 65 mass%, 70 mass%, 75 mass% and 80 mass%, and these upper limit values and lower limit values can be arbitrarily combined.

In the present disclosure, in order for the copolymer to have better hydrophilicity, the content of the structural unit (B) derived from the monomer (b) with respect to a total amount (100 mass%) of all structural units in the copolymer is preferably 0.5 mass% or more and 45 mass% or less, more preferably 0.75 mass% or more and 40 mass% or less, still more preferably 1.0 mass% or more and 35 mass% or less, yet more preferably 1.1 mass% or more and 30 mass% or less, and particularly preferably 1.2 mass% or more and 20 mass% or less.

In a preferable embodiment of the present disclosure, with respect to a total amount (100 mass%) of all structural units in the copolymer, the upper limit value of the content of the structural unit (B) derived from the monomer (b) may be a value of 45 mass%, 40 mass%, 35 mass%, 30 mass%, 28 mass%, 26 mass%, 24 mass%, 22 mass% and 20 mass%, the lower limit value of the content of the structural unit (B) derived from the monomer (b) may be a value of 0.5 mass%, 0.75 mass%, 1.0 mass%, 1.1 mass%, 1.2 mass%, 1.5 mass%, 2 mass%, 2.5 mass%, 2.6 mass%, 2.8 mass%, 3 mass%, 3.2 mass% and 3.4 mass%, and these upper limit values and lower limit values can be arbitrarily combined.

The copolymer of the present disclosure is preferably water-soluble. In the present disclosure, a water-soluble copolymer is a copolymer that is evaluated as "O" (transparent and completely dissolved) in <Solubility evaluation method> described in examples below.

In one embodiment of the present disclosure, the copolymer of the present disclosure preferably contains elemental sulfur. When the copolymer contains elemental sulfur, the content of elemental sulfur in the copolymer is generally more than 0 mg/kg and 20,000 mg/kg or less, preferably 50 mg/kg or more and 18,000 mg/kg or less, more preferably 100 mg/kg or more and 16,000 mg/kg or less, still more preferably 500 mg/kg or more and 10,000 mg/kg or less, and yet more preferably 1,000 mg/kg or more and 5,000 mg/kg or less.

The content of elemental sulfur in the copolymer can be measured by, for example, "Multi-type ICP Optical Emission Spectrometer" (commercially available from Shimadzu Corporation). A specific method of measuring the content of elemental sulfur in the copolymer will be described in examples described below.

In the present disclosure, the monomer (a) is preferably a monomer represented by the following Formula (1). 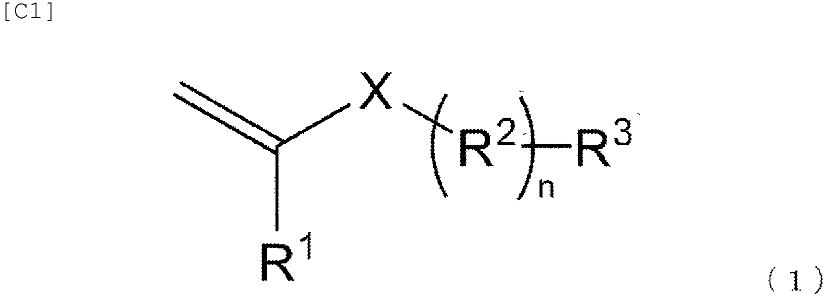
(In Formula (1), R¹ is a hydrogen atom or a linear or branched alkyl group having 1 to 20 (1, 2, 3, 4, 5, 6, 7, 8, 9, 10, 11, 12, 13, 14, 15, 16, 17, 18, 19 or 20) carbon atoms,
X is an amide bond (-C(O)NH- or -NHC(O)-), or an ester bond (-C(O)O- or -OC(O)-),
R² is a single bond, a linear or branched alkylene group having 1 to 10 (1, 2, 3, 4, 5, 6, 7, 8, 9 or 10) carbon atoms which may have a substituent, or a linear or branched oxyalkylene group having 1 to 10 (1, 2, 3, 4, 5, 6, 7, 8, 9 or 10) carbon atoms which may have a substituent,
n is a number from 1 or more and 20 or less on average,
when R² is a single bond or a linear or branched alkylene group having 1 to 10 (1, 2, 3, 4, 5, 6, 7, 8, 9 or 10) carbon atoms which may have a substituent, R³ is a hydroxyl group or a phosphate group, and
when R² is a linear or branched oxyalkylene group having 1 to 10 (1, 2, 3, 4, 5, 6, 7, 8, 9 or 10) carbon atoms which may have a substituent, R³ is a hydrogen atom, a hydroxyl group, or a phosphate group.)

In Formula (1), R¹ is preferably a hydrogen atom or a linear or branched alkyl group having 1 to 10 (1, 2, 3, 4, 5, 6, 7, 8, 9 or 10) carbon atoms.

In Formula (1), R¹ is more preferably a hydrogen atom or a linear or branched alkyl group having 1 to 6 (1, 2, 3, 4, 5 or 6) carbon atoms.

In Formula (1), R¹ is still more preferably a hydrogen atom or an alkyl group having 1 to 3 (1, 2 or 3) carbon atoms (a methyl group, an ethyl group, an n-propyl group or an isopropyl group).

In Formula (1), R¹ is particularly preferably a hydrogen atom or a methyl group.

In Formula (1), R¹ is most preferably a hydrogen atom.

In Formula (1), X is preferably an ester bond.

In Formula (1), R² is preferably a linear or branched alkylene group having 1 to 6 (1, 2, 3, 4, 5 or 6) carbon atoms which may have a substituent, or a linear or branched oxyalkylene group having 1 to 6 (1, 2, 3, 4, 5 or 6) carbon atoms which may have a substituent.

In a more preferable embodiment of the present disclosure, in Formula (1),
R¹ is a hydrogen atom or a linear or branched alkyl group having 1 to 6 (1, 2, 3, 4, 5 or 6) carbon atoms, and X is an ester bond,
R² is a linear or branched alkylene group having 1 to 6 (1, 2, 3, 4, 5 or 6) carbon atoms which may have a substituent, n is a number from 2 or more and 18 or less on average, and R³ is a hydroxyl group or a phosphate group; or
R² is a linear or branched oxyalkylene group having 1 to 6 (1, 2, 3, 4, 5 or 6) carbon atoms which may have a substituent, n is a number from 2 or more and 18 or less on average, and R³ is a hydrogen atom.

In Formula (1), R² is more preferably an alkylene group having 1 to 3 (1, 2 or 3) carbon atoms which may have a substituent or an oxyalkylene group having 1 to 3 (1, 2 or 3) carbon atoms which may have a substituent.

In a still more preferable embodiment of the present disclosure, in Formula (1),
R¹ is a hydrogen atom or an alkyl group having 1 to 3 (1, 2 or 3) carbon atoms, and X is an ester bond,
R² is an alkylene group having 1 to 3 (1, 2 or 3) carbon atoms which may have a substituent, n is a number from 2.5 or more and 16 or less on average, and R³ is a hydroxyl group or a phosphate group; or
R² is an oxyalkylene group having 1 to 3 (1, 2 or 3) carbon atoms which may have a substituent, n is a number from 2.5 or more and 16 or less on average, and R³ is a hydrogen atom.

In a particularly preferable embodiment of the present disclosure, in Formula (1),
R¹ is a hydrogen atom or a methyl group, and X is an ester bond,
R² is an alkylene group having 1 to 3 (1, 2 or 3) carbon atoms which may have a substituent, n is a number from 3 or more and 14 or less on average, and R³ is a hydroxyl group or a phosphate group; or
R² is an oxyalkylene group having 1 to 3 (1, 2 or 3) carbon atoms which may have a substituent, n is a number from 3 or more and 14 or less on average, and R³ is a hydrogen atom.

In a most preferable embodiment of the present disclosure, in Formula (1),
R¹ is a hydrogen atom or a methyl group, and X is an ester bond,
R² is an alkylene group having 1 to 3 (1, 2 or 3) carbon atoms, n is a number from 3.5 or more and 12 or less on average, and R³ is a hydroxyl group or a phosphate group; or
R² is an oxyalkylene group having 1 to 3 (1, 2 or 3) carbon atoms which may have one hydroxyl group, n is a number from 3.5 or more and 12 or less on average, and R³ is a hydrogen atom.

In Formula (1), n is the number of repetitions, and is a number from 1 or more and 20 or less on average. The value of n can be measured by nuclear magnetic resonance analysis (NMR). Specifically, the value of n can be calculated by measuring the integral value of 3 ppm to 4 ppm.

In a preferable embodiment of the present disclosure, in Formula (1), the upper limit value of n may be a value of 19, 18, 17, 16, 15, 14, 13, 12, 11 and 10, the lower limit value of n may be a value of 1.5, 2, 2.5, 3, 3.5, 4 and 4.5, and these upper limit values and lower limit values can be arbitrarily combined.

In one embodiment of the present disclosure, in Formula (1), n is
preferably a number from 2 or more and 18 or less on average,
more preferably a number from 2.5 or more and 16 or less on average,
still more preferably a number from 3 or more and 14 or less on average,
yet more preferably a number from 3.5 or more and 12 or less on average, and
particularly preferably a number from 4 or more and 11 or less on average.

In Formula (1), when R² is a linear or branched oxyalkylene group having 1 to 10 (1, 2, 3, 4, 5, 6, 7, 8, 9 or 10) carbon atoms which may have a substituent, R³ is preferably a hydrogen atom.

For R² in Formula (1), the substituent is not particularly limited as long as it is not a hydrogen atom, and examples thereof include a halogen atom (a fluorine atom, a chlorine atom, a bromine atom or an iodine atom), a cyano group, a nitro group, a hydroxyl group, an amino group, an ester group, a carboxy group, an epoxy group, a phosphate group, an isocyanate group, and a phenyl group. These substituents may be used alone or two or more thereof may be used in combination.

In one embodiment of the present disclosure, the number of substituents for R² in Formula (1) is generally 1 or more and 4 or less, preferably 1 or 2, and more preferably 1.

In one embodiment of the present disclosure, for R² in Formula (1), the substituent is preferably one or more and four or less hydroxyl groups, more preferably one or two hydroxyl groups, and still more preferably one hydroxyl group.

The monomer (a) represented by Formula (1) is
preferably at least one selected from the group consisting of 2-hydroxyethyl acrylate, 2-hydroxyethyl methacrylate, 2-methacryloyloxyethyl acid phosphate, 2-acryloyloxyethyl acid phosphate, hydroxyethyl acrylamide, N-methylolacrylamide, glycerin monomethacrylate, polyethylene glycol monoacrylate, polyethylene glycol monomethacrylate, polypropylene glycol monoacrylate and polypropylene glycol monomethacrylate,
more preferably at least one selected from the group consisting of 2-methacryloyloxyethyl acid phosphate, 2-acryloyloxyethyl acid phosphate, polyethylene glycol monoacrylate, polyethylene glycol monomethacrylate, polypropylene glycol monoacrylate and polypropylene glycol monomethacrylate,
still more preferably at least one selected from the group consisting of 2-methacryloyloxyethyl acid phosphate, 2-acryloyloxyethyl acid phosphate, polyethylene glycol monoacrylate and polyethylene glycol monomethacrylate, and
particularly preferably 2-acryloyloxyethyl acid phosphate and/or polyethylene glycol monoacrylate.

As the monomer (a) represented by Formula (1), a wide range of known commercially available products can be used. Examples of commercially available products include "BLEMMER AE-200," "BLEMMER AE-400," "BLEMMER GLM," "BLEMMER GLM-EX," "BLEMMER GLM-R," "BLEMMER E," "BLEMMER PE-90," "BLEMMER PE-200," "BLEMMER PE-350," "BLEMMER AP-200," "BLEMMER AP-400," "BLEMMER AP-550," "BLEMMER AP-800," "BLEMMER AP-400D," "BLEMMER AP-1000D," "BLEMMER P," "BLEMMER PP-1000," "BLEMMER PP-500," and "BLEMMER PP-800" (commercially available from NOF Corporation); and "Light Acrylate P-1A(N)," and "Light Ester P-1M" (commercially available from Kyoeisha Chemical Co., Ltd.).

In the present disclosure, the monomer (b) is preferably a monomer represented by the following Formula (2). 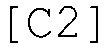 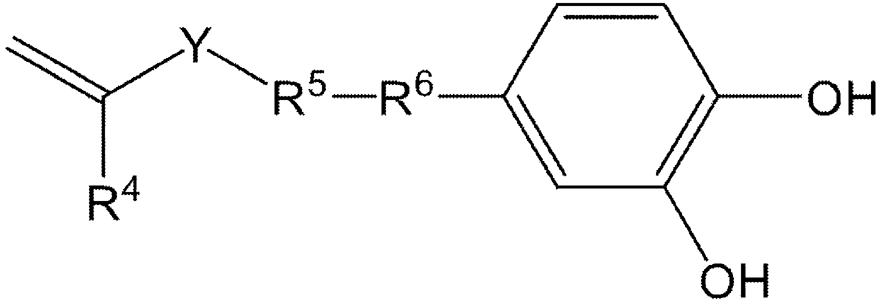
(In the formula, R⁴ is a hydrogen atom or a linear or branched alkyl group having 1 to 20 (1, 2, 3, 4, 5, 6, 7, 8, 9, 10, 11, 12, 13, 14, 15, 16, 17, 18, 19 or 20) carbon atoms,
Y is an amide bond (-C(O)NH- or -NHC(O)-) or an ester bond (-C(O)O- or -OC(O)-),
R⁵ is a single bond or a linear or branched alkylene group having 1 to 10 (1, 2, 3, 4, 5, 6, 7, 8, 9 or 10) carbon atoms which may have a substituent, and
R⁶ is a single bond, an ether bond (-O-), -CH(OH)-, an ester bond (-C(O)O- or -OC(O)-), or a carbonate group (-OC(O)O-).)

In Formula (2), R⁴ is preferably a hydrogen atom or a linear or branched alkyl group having 1 to 10 (1, 2, 3, 4, 5, 6, 7, 8, 9 or 10) carbon atoms.

In Formula (2), R⁴ is more preferably a hydrogen atom or a linear or branched alkyl group having 1 to 6 (1, 2, 3, 4, 5 or 6) carbon atoms.

In Formula (2), R⁴ is still more preferably a hydrogen atom or an alkyl group having 1 to 3 (1, 2 or 3) carbon atoms.

In Formula (2), R⁴ is particularly preferably a hydrogen atom or a methyl group.

In Formula (2), R⁴ is most preferably a methyl group.

In Formula (2), R⁵ is preferably a linear or branched alkylene group having 1 to 6 (1, 2, 3, 4, 5 or 6) carbon atoms which may have a substituent, and more preferably an alkylene group having 1 to 3 (1, 2 or 3) carbon atoms which may have a substituent.

In Formula (2), R⁶ is preferably a single bond or an ester bond.

In one embodiment of the present disclosure, in Formula (2), when Y is an amide bond, R⁵ is preferably a linear or branched alkylene group having 1 to 6 (1, 2, 3, 4, 5 or 6) carbon atoms which may have a substituent, and more preferably a linear or branched alkylene group having 1 to 3 (1, 2 or 3) carbon atoms which may have a substituent.

In one embodiment of the present disclosure, in Formula (2), when Y is an amide bond and R⁶ is a single bond, R⁵ is preferably a linear or branched alkylene group having 1 to 6 (1, 2, 3, 4, 5 or 6) carbon atoms which may have a substituent, and more preferably an alkylene group having 1 to 3 (1, 2 or 3) carbon atoms which may have a substituent.

In one embodiment of the present disclosure, in Formula (2), when Y is an ester bond, R⁵ is preferably a linear or branched alkylene group having 1 to 6 (1, 2, 3, 4, 5 or 6) carbon atoms which may have a substituent, more preferably an alkylene group having 1 to 3 (1, 2 or 3) carbon atoms which may have a substituent, still more preferably an alkylene group having 1 to 3 (1, 2 or 3) carbon atoms and having a hydroxyl group, yet more preferably an alkylene group having 1 to 3 (1, 2 or 3) carbon atoms and having one hydroxyl group, and particularly preferably an n-propylene group having one hydroxyl group.

In one embodiment of the present disclosure, in Formula (2), when Y and R⁶ are both an ester bond, R⁵ is preferably a linear or branched alkylene group having 1 to 6 (1, 2, 3, 4, 5 or 6) carbon atoms which may have a substituent, more preferably an alkylene group having 1 to 3 (1, 2 or 3) carbon atoms which may have a substituent, still more preferably an alkylene group having 1 to 3 (1, 2 or 3) carbon atoms and having a hydroxyl group, yet more preferably an alkylene group having 1 to 3 (1, 2 or 3) carbon atoms and having one hydroxyl group, and particularly preferably an n-propylene group having one hydroxyl group.

For R⁵ in Formula (2), examples of substituents include a halogen atom (a fluorine atom, a chlorine atom, a bromine atom or an iodine atom), a cyano group, a nitro group, a hydroxyl group, an amino group, an ester group, a carboxy group, an epoxy group, a phosphate group, an isocyanate group, and a phenyl group. These substituents may be used alone or two or more thereof may be used in combination. Among these substituents, a hydroxyl group is preferable. The number of substituents for R⁵ in Formula (2) is generally 1 or more and 4 or less, preferably 1 or 2, and more preferably 1.

In one embodiment of the present disclosure, for R⁵ in Formula (2), the substituent is preferably one or more and four or less hydroxyl groups, more preferably one or two hydroxyl groups, and still more preferably one hydroxyl group.

In one preferable embodiment of the present disclosure, in Formula (2),
R⁴ is a hydrogen atom or a linear or branched alkyl group having 1 to 6 (1, 2, 3, 4, 5 or 6) carbon atoms, and Y is an amide bond or an ester bond,
when Y is an amide bond, R⁵ is a linear or branched alkylene group having 1 to 6 (1, 2, 3, 4, 5 or 6) carbon atoms which may have a substituent, and R⁶ is a single bond; or
when Y is an ester bond, R⁵ is a linear or branched alkylene group having 1 to 6 (1, 2, 3, 4, 5 or 6) carbon atoms which may have a substituent, and R⁶ is an ester bond.

In a more preferable embodiment of the present disclosure, in Formula (2),
R⁴ is a hydrogen atom or an alkylene group having 1 to 3 (1, 2 or 3) carbon atoms, and Y is an amide bond or an ester bond,
when Y is an amide bond, R⁵ is an alkylene group having 1 to 3 (1, 2 or 3) carbon atoms which may have a substituent, and R⁶ is a single bond; or
when Y is an ester bond, R⁵ is an alkylene group having 1 to 3 (1, 2 or 3) carbon atoms which may have a substituent, and R⁶ is an ester bond.

In a still more preferable embodiment of the present disclosure, in Formula (2),
R⁴ is a hydrogen atom or a methyl group, and Y is an amide bond or an ester bond,
when Y is an amide bond, R⁵ is an alkylene group having 1 to 3 (1, 2 or 3) carbon atoms which may have a substituent, and R⁶ is a single bond; or
when Y is an ester bond, R⁵ is an alkylene group having 1 to 3 (1, 2 or 3) carbon atoms and having one hydroxyl group, and R⁶ is an ester bond.

In a particularly preferable embodiment of the present disclosure, in Formula (2),
R⁴ is a methyl group, and Y is an amide bond or an ester bond,
when Y is an amide bond, R⁵ is an alkylene group having 1 to 3 (1, 2 or 3) carbon atoms which may have a substituent, and R⁶ is a single bond; or
when Y is an ester bond, R⁵ is an alkylene group having 1 to 3 (1, 2 or 3) carbon atoms and having one hydroxyl group, and R⁶ is an ester bond.

When Y is an amide bond, the monomer (b) represented by Formula (2) is
preferably at least one selected from the group consisting of
N-[2-(3,4-dihydroxyphenyl)methyl](meth)acrylamide,
N-[2-(3,4-dihydroxyphenyl)ethyl](meth)acrylamide [also referred to as dopamine methacrylamide (DMA)],
N-[2-(3,4-dihydroxyphenyl)propyl](meth)acrylamide,
N-[2-(3,4-dihydroxyphenyl)butyl](meth)acrylamide,
N-[2-(3,4-dihydroxyphenyl)pentyl](meth)acrylamide,
N-[2-(3,4-dihydroxyphenyl)hexyl](meth)acrylamide,
N-[2-(3,4-dihydroxyphenyl)heptyl](meth)acrylamide,
N-[2-(3,4-dihydroxyphenyl)octyl](meth)acrylamide,
N-[2-(3,4-dihydroxyphenyl)nonyl](meth)acrylamide, and
N-[2-(3,4-dihydroxyphenyl)decyl](meth)acrylamide.

When Y is an ester bond, the monomer (b) represented by Formula (2) is preferably at least one selected from the group consisting of
N-[2-(3,4-dihydroxyphenyl)methyl](meth)acrylate,
N-[2-(3,4-dihydroxyphenyl)ethyl](meth)acrylate,
N-[2-(3,4-dihydroxyphenyl)propyl](meth)acrylate,
N-[2-(3,4-dihydroxyphenyl)butyl](meth)acrylate,
N-[2-(3,4-dihydroxyphenyl)pentyl](meth)acrylate,
N-[2-(3,4-dihydroxyphenyl)hexyl](meth)acrylate,
N-[2-(3,4-dihydroxyphenyl)heptyl](meth)acrylate,
N-[2-(3,4-dihydroxyphenyl)octyl](meth)acrylate,
N-[2-(3,4-dihydroxyphenyl)nonyl](meth)acrylate, and
N-[2-(3,4-dihydroxyphenyl)decyl](meth)acrylate.

As the monomer (b) represented by Formula (2), a wide range of known commercially available products can be used. Examples of commercially available products include "dopamine methacrylamide (DMA)" (commercially available from Tokyo Chemical Industry Co., Ltd.).

In the copolymer of the present disclosure, the arrangement of the structural units (A) derived from the monomer (a) and the arrangement of the structural units (B) derived from the monomer (b) may each be random, block, graft or gradient.

The copolymer of the present disclosure may further include a structural unit other than the structural unit (A) derived from the monomer (a) and the structural unit (B) derived from the monomer (b). Examples of structural units other than the structural unit (A) and the structural unit (B) include a structural unit derived from a chain transfer agent and a structural unit derived from a polymerization initiator.

In one embodiment of the present disclosure, the content of structural units other than the structural unit (A) derived from the monomer (a) and the structural unit (B) derived from the monomer (b) in all structural units of the copolymer of the present disclosure is preferably in the order of 20 mass% or less, 17 mass% or less, 15 mass% or less, 12 mass% or less, 10 mass% or less, 9 mass% or less, 8.5 mass% or less, 7.5 mass% or less, 5 mass% or less and 4 mass% or less.

### 2. Method of producing copolymer

A method of producing the copolymer of the present disclosure includes a step of copolymerizing the monomer (a) having a hydrophilic group (excluding a catechol group) and the monomer (b) having a catechol group in the presence of a chain transfer agent. In the production method of the present disclosure, when such a configuration is used, it is possible to produce a copolymer which exhibits excellent dispersibility and sufficient solubility in water by a simple method.

Hereinafter, the method of producing the copolymer of the present disclosure will be described in detail. Hereinafter, the method of producing the copolymer of the present disclosure will be simply referred to as the "production method of the present disclosure." In the production method of the present disclosure, the step of copolymerizing the monomer (a) and the monomer (b) in the presence of a chain transfer agent may be simply referred to as the "copolymerization step."

Unless otherwise specified, details of the copolymer produced by the production method of the present disclosure are as described in the above "1. Copolymer." In addition, unless otherwise specified, details of the monomer (a) and the monomer (b) used in the production method of the present disclosure are as described in the above "1. Copolymer."

As the method of copolymerizing the monomer (a) and the monomer (b), a wide range of known methods can be used, and examples thereof include emulsion polymerization, suspension polymerization, bulk polymerization, interfacial polymerization, and solution polymerization. Among these, solution polymerization is preferable.

As the method of copolymerizing the monomer (a) and the monomer (b), a wide range of known methods can be used. For example, a method in which an organic solvent is added to a mixture containing the monomer (a) and the monomer (b) to prepare a monomer mixture solution, a polymerization initiator and a chain transfer agent are additionally added to the obtained monomer mixture solution, and the monomer (a) and the monomer (b) are copolymerized may be used.

In the copolymerization step, examples of chain transfer agents include 1-mercapto-1,1-methanediol, 1-mercapto-1,1-ethanediol, 3-mercapto-1,2-propanediol, 2-mercapto-1,2-propanediol, 2-mercapto-2-methyl-1,3-propanediol, 2-mercapto-2-ethyl-1,3-propanediol, 1-mercapto-2,2-propanediol, 2-mercaptoethyl-2-methyl-1,3-propanediol, 2-mercaptoethyl-2-ethyl-1,3-propanediol, octyl mercaptan, dodecyl mercaptan, and 3-mercaptopropionic acid.

In the copolymerization step, in order for the polymerization to proceed efficiently, the amount of the chain transfer agent used with respect to a total amount of 100 parts by mass of the monomer (a) and the monomer (b) is preferably 0.01 parts by mass or more and 10 parts by mass or less.

As the polymerization initiator, a wide range of known azo compounds or organic peroxides generally used in this field can be used.

Examples of azo compounds include 2,2'-azobisisobutyronitrile, 2,2'-azobis(2-methylbutyronitrile), 1,1'-azobis(cyclohexane-1-carbonitrile), 2,2'-azobis(2,4-dimethylvaleronitrile), 2,2'-azobis(2,4-dimethyl -4-methoxyvaleronitrile), 2,2'-azobis(4-methoxy-2,4-dimethylvaleronitrile), dimethyl 1,1'-azobis(1-cyclohexanecarboxylate), dimethyl 2,2'-azobis(2-methylpropionate), 4,4'-azobis(4-cyanovaleric acid), 2,2'-azobis(2-hydroxymethylpropionitrile), and 2,2'-azobis[2-(2-imidazolin-2-yl)propane].

Examples of organic peroxides include benzoyl peroxide, t-butyl peroxy 2-ethylhexaate, t-butyl perbenzoate, cumene hydroperoxide, diisopropyl peroxydicarbonate, di-n-propyl peroxydicarbonate, di(2-ethoxyethyl) peroxydicarbonate, t-butyl peroxyneodecanoate, t-butyl peroxypivalate, (3,5,5-trimethylhexanoyl)peroxide, dipropionyl peroxide, and diacetyl peroxide.

In order for the polymerization to proceed efficiently, the amount of the polymerization initiator used with respect to a total amount of 100 parts by mass of the monomer (a) and the monomer (b) is preferably 0.1 parts by mass or more and 5 parts by mass or less.

Examples of organic solvents include an ether compound, an alcohol compound, an amide compound, an ester compound, a ketone compound, a sulfoxide compound, and a hydrocarbon compound. These organic solvents may be used alone or two or more thereof may be used in combination.

Examples of ether compounds include chain ethers such as diethyl ether; and cyclic ethers such as tetrahydrofuran (THF) and dioxane. These ether compounds may be used alone or two or more thereof may be used in combination.

Examples of alcohol compounds include methanol, ethanol, n-propanol, isopropanol, n-butanol, isobutyl alcohol, sec-butyl alcohol, and tert-butyl alcohol. These alcohol compounds may be used alone or two or more thereof may be used in combination.

Examples of amide compounds include N,N-dimethylacetamide, and N,N-dimethylformamide (DMF). These amide compounds may be used alone or two or more thereof may be used in combination.

Examples of ester compounds include methyl acetate, ethyl acetate, n-propyl acetate, isopropyl acetate, n-butyl acetate, isobutyl acetate, sec-butyl acetate, 3-methoxybutyl acetate, methyl propionate, ethyl propionate, dimethyl carbonate, diethyl carbonate, and ethyl lactate. These ester compounds may be used alone or two or more thereof may be used in combination.

Examples of ketone compounds include acetone, methyl ethyl ketone, methyl isobutyl ketone, ethyl butyl ketone, cyclohexanone, and isophorone. These ketone compounds may be used alone or two or more thereof may be used in combination.

Examples of sulfoxide compounds include dimethyl sulfoxide.

Examples of hydrocarbon compounds include aromatic hydrocarbons such as benzene, toluene, and xylene; aliphatic hydrocarbons such as hexane; and alicyclic hydrocarbons such as cyclohexane. These hydrocarbon compounds may be used alone or two or more thereof may be used in combination.

In order for the polymerization to proceed efficiently, the amount of the organic solvent used with respect to a total amount of 100 parts by mass of the monomer (a) and the monomer (b) is preferably 100 parts by mass or more and 1,000 parts by mass or less.

In the copolymerization step, the polymerization reaction is in a temperature range of generally 30°C or higher and 100°C or lower, and preferably 40°C or higher and 80°C or lower. The temperature during the polymerization reaction may be constant or may be changed during the polymerization reaction.

In the copolymerization step, the polymerization reaction time from the start of polymerization to the end of polymerization is generally 0.5 hours or longer and 48 hours or shorter, and preferably 1 hour or longer and 30 hours or shorter.

### 3. Application of copolymer

Because the copolymer of the present disclosure has excellent dispersibility and sufficient solubility in water, it can be suitably used in a wide range of applications such as a dispersing agent, a coating agent, a paint, a lubricating film, a battery, an electrode material, a coating material, a plating, and a catalyst. Unless otherwise specified, details of the copolymer of the present disclosure are as described in the above "1. Copolymer."

Specific applications of the dispersing agent containing the copolymer of the present disclosure include, for example, a dispersing agent for inorganic pigments, a dispersing agent for organic pigments, a dispersing agent for inorganic particles, a dispersing agent for organic particles, and a cell dispersing agent.

Examples of inorganic pigments to which the dispersing agent for inorganic pigments can be applied include white pigments such as titanium dioxide, zinc oxide, lithopone, precipitated calcium carbonate, white carbon, aluminum oxide, aluminum hydroxide, and barium sulfate; black pigments such as carbon black, titanium black, titanium carbon, iron oxide, and graphite; and iron oxide, barium yellow, cadmium red, and chrome yellow.

Examples of organic pigments to which the dispersing agent for organic pigments can be applied include phthalocyanine pigments such as phthalocyanine blue and phthalocyanine green; azo pigments such as azo red, azo yellow, and azo orange; quinacridone pigments such as quinacridone red, shinkasha red, and shinkasha magenta; perylene pigments such as perylene red, and perylene maroon; diazo pigments; isoindolinone pigments; dioxazine pigments; perylene pigments; thioindigo pigments; anthraquinone pigments; and quinophthalone pigments.

Examples of inorganic particles to which the dispersing agent for inorganic particles can be applied include zinc oxide particles, silicon oxide (silica) particles, titanium oxide (titania) particles, zirconium oxide (zirconia) particles, magnesium oxide (magnesia) particles, aluminum oxide (alumina) particles, and cerium oxide (ceria) particles.

Examples of organic particles to which the dispersing agent for organic particles can be applied include PTFE particles, hydrocarbon particles, polyethylene particles, polystyrene particles, polyvinylidene fluoride particles, polyvinyl alcohol particles, polyvinyl chloride particles, polyvinylidene chloride particles, polyethylene terephthalate particles, and nylon particles.

Examples of cells to which the cell dispersing agent can be applied include mesenchymal stem cells; Chinese hamster ovary-derived CHO cells; mouse connective tissue L929 cells; human embryonic kidney-derived HEK293 cells; human cervical cancer-derived HeLa cells; epithelial cells or endothelial cells that make up various tissues or organs in vivo; contractile skeletal muscle cells, smooth muscle cells, or cardiac muscle cells; neuronal cells, glial cells, or fibroblasts that make up the nervous system; hepatic parenchymal cells, hepatic nonparenchymal cells or adipocytes that are involved in metabolism in vivo; and cells having differentiation ability (for example, stem cells); cells induced to differentiate from cells having differentiation ability; cells contained in blood, lymph, cerebrospinal fluid, sputum, urine, or feces; and microorganisms, viruses or protozoa present in the body or in the environment.

A dispersing agent containing the copolymer of the present disclosure can be suitably used as a dispersing agent for organic particles. The dispersing agent containing the copolymer of the present disclosure can be particularly suitably used as a dispersing agent for PTFE particles.

The content of the copolymer in the dispersing agent is generally more than 50 mass%, preferably 75 mass% or more, more preferably 90 mass% or more, still more preferably 95 mass% or more, yet more preferably 99 mass% or more, even more preferably 99.5 mass% or more, and particularly preferably 99.9 mass% or more. Most preferably, the dispersing agent is composed of only the copolymer.

Specific applications of coating agents containing the copolymer of the present disclosure include, for example, a display coating agent, a vehicle coating agent, a building material coating agent, a print coating agent, and a battery coating agent.

Specific applications of paints containing the copolymer of the present disclosure include, for example, a building material paint, an automobile paint, a semiconductor paint, an industrial product paint, and a structure paint.

A lubricating film containing the copolymer of the present disclosure is generally a film including the copolymer of the present disclosure, particles having a surface free energy of less than 70 mJ/m², and a surfactant.

The lubricating film containing the copolymer of the present disclosure is preferably
a film including the copolymer of the present disclosure, particles having a surface free energy of less than 70 mJ/m², and a surfactant, and
the particles having a surface free energy of less than 70 mJ/m² are at least one selected from the group consisting of PTFE particles, hydrocarbon particles, polyethylene particles, polystyrene particles, polyvinylidene fluoride particles, polyvinyl alcohol particles, polyvinyl chloride particles, polyvinylidene chloride particles, polyethylene terephthalate particles, nylon particles, zinc oxide particles and carbon tubes (nanoparticles).

The lubricating film containing the copolymer of the present disclosure is particularly preferably
a film including the copolymer of the present disclosure, PTFE particles, and a surfactant.

Specific applications of batteries containing the copolymer of the present disclosure include, for example, a nickel-metal hydride battery, a lithium ion secondary battery, a sodium ion secondary battery, a potassium ion secondary battery, and a fuel cell.

In one embodiment of the present disclosure, the battery containing the copolymer of the present disclosure preferably includes a positive electrode, a negative electrode, and an electrode film formed using a composite particle dispersion containing the copolymer of the present disclosure.

As another embodiment of the present disclosure, a battery containing the copolymer of the present disclosure preferably includes a positive electrode, a negative electrode, and a gas diffusion layer formed using a composite particle dispersion containing the copolymer of the present disclosure.

### 4. Composite particle

A composite particle of the present disclosure includes the copolymer of the present disclosure, and particles having a surface free energy of less than 70 mJ/m², and the copolymer is adhered to the surface of the particles having a surface free energy of less than 70 mJ/m². When the composite particle of the present disclosure has such a configuration, it can be dispersed in an aqueous solvent.

Unless otherwise specified, details of the copolymer of the present disclosure are as described in the above "1. Copolymer."

In the composite particle of the present disclosure, the catechol group contained in the copolymer of the present disclosure is adhered to the surface of the particles having a surface free energy of less than 70 mJ/m², and the hydrophilic group contained in the copolymer of the present disclosure has high affinity with the aqueous solvent. Due to the presence of the hydrophilic group on the surface of the composite particle of the present disclosure, the composite particle of the present disclosure has high affinity with the aqueous solvent, and thus the composite particle of the present disclosure can be dispersed in the aqueous solvent. Therefore, the copolymer of the present disclosure can be suitably used as a dispersing agent in place of a conventionally used fluorine surfactant.

The composite particles of the present disclosure are particles formed by compositing the copolymer of the present disclosure and particles having a surface free energy of less than 70 mJ/m². In the present disclosure, compositing means a state in which the catechol group contained in the copolymer of the present disclosure is adhered to the surface of the particles having a surface free energy of less than 70 mJ/m².

In the present disclosure, the mass ratio between the particles having a surface free energy of less than 70 mJ/m² and the copolymer of the present disclosure (the mass of the particles having a surface free energy of less than 70 mJ/m²:the mass of the copolymer of the present disclosure) is preferably 100:30 to 100:0.5, and more preferably 100:20 to 100:1.

In the present disclosure, the content of the particles having a surface free energy of less than 70 mJ/m² in the composite particles is preferably 70 mass% or more and 99 mass% or less.

In the present disclosure, the content of the copolymer in the composite particle of the present disclosure is preferably 1 mass% or more and 30 mass% or less.

The copolymer of the present disclosure can be adhered to the surface of the particles having a surface free energy of less than 70 mJ/m² by, for example, mixing the copolymer in an aqueous solvent, adding particles having a surface free energy of less than 70 mJ/m² thereto, and stirring the mixture.

As the aqueous solvent, water, a water-soluble organic solvent, a mixed solvent thereof or the like can be used. Examples of water include natural water, purified water, distilled water, deionized water, and pure water.

Examples of water-soluble organic solvents include an alcohol compound, a ketone compound, an ether compound, an amide compound, a sulfoxide compound, an ester compound, and a glycol compound. These water-soluble organic solvents may be used alone or two or more thereof may be used in combination.

Examples of alcohol compounds include methanol, ethanol, n-propanol, isopropanol, n-butanol, isobutyl alcohol, sec-butyl alcohol, and tert-butyl alcohol. These alcohol compounds may be used alone or two or more thereof may be used in combination.

Examples of ketone compounds include acetone, methyl ethyl ketone, methyl isobutyl ketone, ethyl butyl ketone, cyclohexanone, and isophorone. These ketone compounds may be used alone or two or more thereof may be used in combination.

Examples of ether compounds include diethyl ether, tetrahydrofuran (THF), and dioxane. These ether compounds may be used alone or two or more thereof may be used in combination.

Examples of amide compounds include N,N-dimethylformamide (DMF), and N,N-dimethylacetamide. These amide compounds may be used alone or two or more thereof may be used in combination.

Examples of sulfoxide compounds include dimethyl sulfoxide (DMSO).

Examples of ester compounds include methyl acetate, ethyl acetate, n-propyl acetate, isopropyl acetate, n-butyl acetate, isobutyl acetate, sec-butyl acetate, 3-methoxybutyl acetate, methyl propionate, ethyl propionate, dimethyl carbonate, diethyl carbonate, and ethyl lactate. These ester compounds may be used alone or two or more thereof may be used in combination.

Examples of glycol compounds include ethylene glycol, diethylene glycol, propylene glycol, propylene glycol monomethyl ether, propylene glycol monobutyl ether, and propylene glycol methyl ether acetate. These glycol compounds may be used alone or two or more thereof may be used in combination.

In one embodiment of the present disclosure, in the composite particle of the present disclosure, in order to achieve better dispersibility, preferably, at least a part of the surface of the particles having a surface free energy of less than 70 mJ/m² is coated with the copolymer of the present disclosure, and more preferably, the entire surface of the particles having a surface free energy of less than 70 mJ/m² is coated with the copolymer of the present disclosure.

Preferably, the composite particle of the present disclosure further contains a surfactant, and the surfactant is adhered to the surface of the particles having a surface free energy of less than 70 mJ/m². When the composite particle of the present disclosure has such a configuration, it can be dispersed well in an aqueous solvent.

When the composite particle of the present disclosure contains a surfactant, the content of the surfactant in the composite particle is preferably 1 mass% or more and 20 mass% or less because the composite particle can be dispersed well in an aqueous solvent.

As the surfactant, a wide range of known surfactants (excluding a fluorine surfactant) generally used in this field can be used. Examples of surfactants include an anionic surfactant, a cationic surfactant, an amphoteric surfactant, and a nonionic surfactant. Among these, a nonionic surfactant is preferable because the composite particle can be dispersed well in an aqueous solvent. These surfactants may be used alone or two or more thereof may be used in combination.

Examples of anionic surfactants include sulfate ester salts such as alkali metal salts of higher fatty acids; sulfonates such as alkylbenzenesulfonate, alkylsulfonate, and paraffin sulfonate; and phosphate ester salts such as higher alcohol phosphate ester salts, and these anionic surfactants may be used alone or two or more thereof may be used in combination.

Examples of cationic surfactants include quaternary ammonium salts such as alkyltrimethylammonium salts.

Examples of amphoteric surfactants include amino acid type amphoteric surfactants such as higher alkylaminopropionate; and betaine typeamphoteric surfactants such as higher alkyl dimethyl betaine, and higher alkyl dihydroxyethyl betaine, and these amphoteric surfactants may be used alone or two or more thereof may be used in combination.

Examples of nonionic surfactants include polyoxyethylene alkyl ether, polyoxyethylene phenyl ether, polyoxyethylene alkyl ester, propylene glycol-propylene oxide copolymers, perfluoroalkylethylene oxide adducts, and 2-ethylhexanol ethylene oxide adducts, and these nonionic surfactants may be used alone or two or more thereof may be used in combination.

As the surfactant, a wide range of known commercially available products can be used. Examples of commercially available products include "NOIGEN TDS-80," and "NOIGEN XL-80" (commercially available from DKS Co., Ltd.).

In the composite particle of the present disclosure, in the particles having a surface free energy of less than 70 mJ/m², the surface free energy is preferably 50 mJ/m² or less, more preferably 45 mJ/m² or less, still more preferably 40 mJ/m² or less, and yet more preferably 36 J/m² or less.

In the composite particle of the present disclosure, the particles having a surface free energy of less than 70 mJ/m² are preferably at least one particle selected from the group consisting of
PTFE particles (surface free energy=18 mJ/m²),
hydrocarbon particles (surface free energy=22 mJ/m²),
polyethylene particles (surface free energy=31 mJ/m²),
polystyrene particles (surface free energy=33 mJ/m²),
polyvinylidene fluoride particles (surface free energy=33 mJ/m²),
polyvinyl alcohol particles (surface free energy=37 mJ/m²),
polyvinyl chloride particles (surface free energy=39 mJ/m²),
polyvinylidene chloride particles (surface free energy=40 mJ/m²),
polyethylene terephthalate particles (surface free energy=43 mJ/m²),
nylon particles (surface free energy=46 mJ/m²),
zinc oxide particles (surface free energy=30.6 to 35.8 mJ/m²), and
carbon tubes (nanoparticles) (surface free energy=40 mJ/m² or more and less than 70 mJ/m²).

In the composite particle of the present disclosure, the particles having a surface free energy of less than 70 mJ/m² are preferably PTFE particles or carbon tubes (nanoparticles) and particularly preferably PTFE particles because they can be dispersed well in an aqueous solvent.

In the composite particle of the present disclosure, the primary particle size of the particles having a surface free energy of less than 70 mJ/m² is preferably 10 nm or more and 1000 nm or less. The primary particle size can be measured using, for example, a particle size measurement device ("Zetasizer Nano ZS," commercially available from Malvern Panalytical Ltd.).

In the composite particle of the present disclosure, as the particles having a surface free energy of less than 70 mJ/m², a wide range of known commercially available products can be used. Examples of commercially available products include "Dyneon TF9202Z" (commercially available from 3M) and "Lubron L-5" (commercially available from Daikin Industries, Ltd.).

### 5. Composite particle dispersion

A composite particle dispersion of the present disclosure contains the composite particle of the present disclosure and an aqueous solvent, and the composite particle is dispersed in the aqueous solvent.

Unless otherwise specified, details of the copolymer of the present disclosure are as described in the above "1. Copolymer." Unless otherwise specified, details of the composite particle of the present disclosure are as described in the above "4. Composite particle."

The composite particle of the present disclosure can be dispersed in an aqueous solvent by adding the composite particle of the present disclosure to an aqueous solvent and stirring the mixture.

As the aqueous solvent, water, a water-soluble organic solvent, a mixed solvent thereof or the like can be used. Examples of water include natural water, purified water, distilled water, deionized water, and pure water.

Examples of water-soluble organic solvents include an alcohol compound, a ketone compound, an ether compound, an amide compound, a sulfoxide compound, an ester compound, and a glycol compound. These water-soluble organic solvents may be used alone or two or more thereof may be used in combination.

Examples of alcohol compounds include methanol, ethanol, n-propanol, isopropanol, n-butanol, isobutyl alcohol, sec-butyl alcohol, and tert-butyl alcohol. These alcohol compounds may be used alone or two or more thereof may be used in combination.

Examples of ketone compounds include acetone, methyl ethyl ketone, methyl isobutyl ketone, ethyl butyl ketone, cyclohexanone, and isophorone. These ketone compounds may be used alone or two or more thereof may be used in combination.

Examples of ether compounds include ether compounds such as diethyl ether, tetrahydrofuran (THF), and dioxane. These ether compounds may be used alone or two or more thereof may be used in combination.

Examples of amide compounds include amide compounds such as N,N-dimethylformamide (DMF), and N,N-dimethylacetamide. These amide compounds may be used alone or two or more thereof may be used in combination.

Examples of sulfoxide compounds include dimethyl sulfoxide (DMSO).

Examples of ester compounds include methyl acetate, ethyl acetate, n-propyl acetate, isopropyl acetate, n-butyl acetate, isobutyl acetate, sec-butyl acetate, 3-methoxybutyl acetate, methyl propionate, ethyl propionate, dimethyl carbonate, diethyl carbonate, and ethyl lactate. These ester compounds may be used alone or two or more thereof may be used in combination.

Examples of glycol compounds include glycol compounds such as ethylene glycol, diethylene glycol, propylene glycol, propylene glycol monomethyl ether, propylene glycol monobutyl ether, and propylene glycol methyl ether acetate. These glycol compounds may be used alone or two or more thereof may be used in combination.

In the present disclosure, the content of the composite particle of the present disclosure in the composite particle dispersion is preferably 1 mass% or more and 70 mass% or less.

The present disclosure provides inventions of the following aspects.

### Item 1.

A copolymer including a structural unit (A) derived from a monomer (a) having a hydrophilic group (excluding a catechol group) and a structural unit (B) derived from a monomer (b) having a catechol group,
wherein the hydrophilic group is a hydroxyl group and/or a phosphate group, and
the mass average molecular weight is 500 or more and 20,000 or less.

### Item 2.

The copolymer according to Item 1, wherein the monomer (a) is a monomer represented by the following Formula (1): 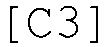 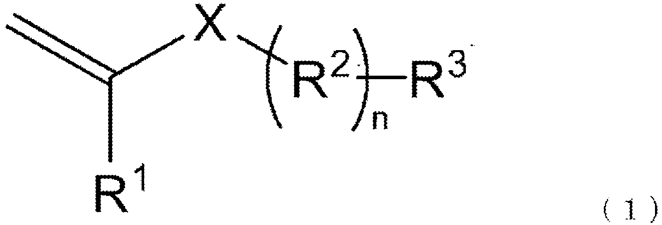
(in the formula, R¹ is a hydrogen atom or a linear or branched alkyl group having 1 to 20 carbon atoms,
X is an amide bond (-C(O)NH- or -NHC(O)-), or an ester bond (-C(O)O- or -OC(O)-),
R² is a single bond, a linear or branched alkylene group having 1 to 10 carbon atoms which may have a substituent, or a linear or branched oxyalkylene group having 1 to 10 carbon atoms which may have a substituent,
n is a number from 1 or more and 20 or less on average,
when R² is a single bond or a linear or branched alkylene group having 1 to 10 carbon atoms which may have a substituent, R³ is a hydroxyl group or a phosphate group, and
when R² is a linear or branched oxyalkylene group having 1 to 10 carbon atoms which may have a substituent, R³ is a hydrogen atom, a hydroxyl group, or a phosphate group).

### Item 3.

The copolymer according to Item 1 or 2, wherein the monomer (b) is a monomer represented by the following Formula (2): 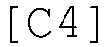 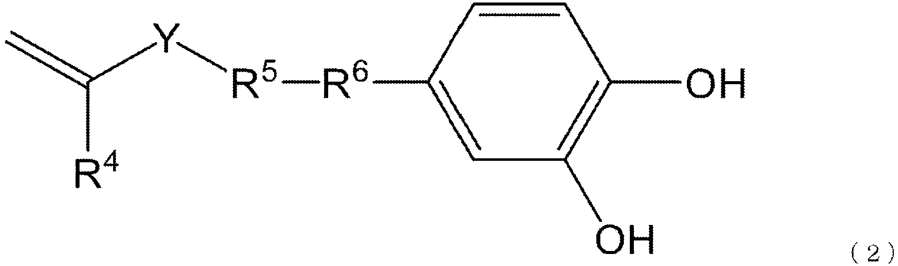
(in the formula, R⁴ is a hydrogen atom or a linear or branched alkyl group having 1 to 20 carbon atoms,
Y is an amide bond (-C(O)NH- or -NHC(O)-), or an ester bond (-C(O)O- or -OC(O)-),
R⁵ is a single bond or a linear or branched alkylene group having 1 to 10 carbon atoms which may have a substituent, and R⁶ is a single bond, an ether bond (-O-), -CH(OH)-, an ester bond (-C(O)O- or -OC(O)-), or a carbonate group (-OC(O)O-)).

### Item 4.

A composite particle, including:
the copolymer according to any one of Items 1 to 3; and
particles having a surface free energy of less than 70 mJ/m²,
wherein the copolymer is adhered to the surface of the particle.

### Item 5.

The composite particle according to Item 4, further including a surfactant,
wherein the surfactant is adhered to the surface of the particle.

### Item 6.

A composite particle dispersion, including:
the composite particle according to Item 4; and
an aqueous solvent,
wherein the composite particle is dispersed in the aqueous solvent.

### Item 7.

A composite particle dispersion, including:
the composite particle according to Item 5; and
an aqueous solvent,
wherein the composite particle is dispersed in the aqueous solvent.

### Item 8.

A method of producing the copolymer according to any one of Items 1 to 3, including
a step of copolymerizing the monomer (a) and the monomer (b) in the presence of a chain transfer agent.

### Item 9.

A dispersing agent including the copolymer according to any one of Items 1 to 3.

### Item 10.

A coating agent including the copolymer according to any one of Items 1 to 3.

### Item 11.

A paint including the copolymer according to any one of Items 1 to 3.

### Item 12.

A lubricating film including the copolymer according to any one of Items 1 to 3.

### Item 13.

A battery including the copolymer according to any one of Items 1 to 3.

### [Examples]

Hereinafter, the present disclosure will be described in more detail with reference to examples, but the present disclosure is not limited to these examples. Here, in the following examples and comparative examples, "room temperature" is a temperature in a range of 20°C to 25°C.

### <Measurement method and evaluation method>

Measurement methods and evaluation methods of examples and comparative examples were as follows. Here, in the measurement methods and evaluation methods, copolymers obtained in examples and comparative examples will be simply referred to as "copolymers." Here, the content of elemental sulfur in the copolymer obtained in Example 2 was also measured.

### <Method of measuring mass average molecular weight and number average molecular weight (Mn)>

The mass average molecular weight and the number average molecular weight of the copolymer mean the mass average molecular weight and the number average molecular weight in terms of polystyrene (PS) measured using gel permeation chromatography (GPC). Specifically, the mass average molecular weight and the number average molecular weight were measured as follows. GPC measurement conditions for the copolymer were as follows.

### (Sample production)

As a pretreatment, about 10 mg of a copolymer was weighed out into a 2 mL volumetric flask and the volume was adjusted to 2 mL with THF. After confirming that the copolymer was dissolved, the solution was filtered through a 0.45 µm nonaqueous syringe filter (commercially available from Shimadzu GLC Ltd.), and measurement was performed.

### (GPC measurement conditions)

·Device="Prominence 20A" high-performance liquid chromatograph (GPC optional software) (commercially available from Shimadzu Corporation)
·Guard column="Shim-pack GPC-800P" (4.6 mm I.D.×10 mm)×1 column (commercially available from Shimadzu Corporation)
·Column="Shim-pack GPC-801" (8 mm I.D.×300 mm)×2 columns, "Shim-pack GPC-803" (8 mm I.D.×300 mm)×1 column, "Shim-pack GPC-804" (8 mm I.D.×300 mm)×1 column (commercially available from Shimadzu Corporation)
·Column temperature=40°C
·Mobile phase=tetrahydrofuran (THF)
·Mobile phase flow rate=1.0 mL/min
·Detector=RI
·Injection amount=100 µL
·Measurement time=45 minutes
·Sampling pitch=500 msec

As standard polystyrene samples for calibration curves, product name "STANDARD SM-105" and "STANDARD SH-75" having a mass average molecular weight of 5,620,000, 3,120,000, 1,250,000, 442,000, 151,000, 53,500, 17,000, 7,660, 2,900, and 1,320 (commercially available from Showa Denko K.K.) were used. The standard polystyrenes for calibration curves were divided into groups
A [(I) 5,620,000, (II) 1,250,000, (III) 151,000, (IV) 17,000, and (V) 2,900] and
B [(VI) 3,120,000, (VII) 442,000, (VIII) 53,500, (IX) 7,660, and (X) 1,320]. Then, A was weighed out in amounts of [(I) 2 mg, (II) 3 mg, (III) 4 mg, (IV) 4 mg, and (V) 4 mg], and then dissolved in 30 mL of THF to prepare a solution A. Next, B was weighed out in amounts of ((VI) 3 mg, (VII) 4 mg, (VIII) 4 mg, (IX) 4 mg, and (X) 4 mg), and then dissolved in 30 mL of THF to prepare a solution B. The standard polystyrene calibration curve was obtained by injecting 100 µL of each of the prepared solution A and solution B, and creating a calibration curve (cubic equation) from the retention time obtained after measurement. The mass average molecular weight and the number average molecular weight were calculated using the obtained calibration curve.

### <Solubility evaluation method>

First, 8 g of deionized water and 0.08 g of the copolymer were added to a glass container, and the mixture was then stirred at room temperature for 30 seconds using a vortex mixer ("Mixer N-61," commercially available from Nissin Rika Co., Ltd.). After stirring, the mixture was visually checked, and the solubility was evaluated according to the following evaluation criteria. Here, a rating of "Δ" or higher was evaluated as having no problem in practical use.

### (Evaluation criteria)

O: transparent and completely dissolved
Δ: cloudy and partially dissolved
×: not dissolved

### <Dispersibility evaluation method>

First, in a glass container, 0.10 g of a surfactant (polyoxyethylene tridecyl ether, "NOIGEN TDS-80," commercially available from DKS Co., Ltd.) was dissolved in 27 g of deionized water. Next, 0.7 g of polytetrafluoroethylene (PTFE) particles (primary particle size: 200 nm to 300 nm) ("Dyneon TF9202Z," commercially available from 3M) was added, and the mixture was stirred at room temperature and 6,000 rpm for 2 minutes using a homogenizer ("Polytlon PT10-35 GT," commercially available from KINEMATICA). Then, 0.07 g of a copolymer was added, the mixture was stirred at room temperature and 6,000 rpm for 2 minutes using a homogenizer, and the copolymer was dissolved. Next, ultrasonication was performed at room temperature for 2 minutes using an ultrasonic homogenizer ("SONIFIER 450," commercially available from Branson) to obtain a dispersion (the solid content concentration of PTFE particles=2.5 mass%). The average particle size of the obtained dispersion was measured using a particle size measurement device ("Zetasizer Nano ZS," commercially available from Malvern Panalytical Ltd.) under the following measurement conditions. When the measured average particle size of the dispersion was in a range of 200 nm or more and 350 nm or less, it was evaluated that the dispersion could be dispersed with the primary particle size. On the other hand, when the measured average particle size of the dispersion was a value larger than 350 nm, it was evaluated that the dispersion was aggregated.

### (Measurement conditions for average particle size of dispersion)

·Cell: DTS0012
·Temperature: 25°C
·Measurement time: 60 seconds

Here, the average particle size of the dispersion was calculated using data analysis software bundled in the particle size measurement device.

### <Elemental sulfur content measurement method>

The content of elemental sulfur in the copolymer was measured as follows.

About 0.3 g of a copolymer was accurately weighed out and placed in a Teflon (registered trademark) container "XP1500 Plus" designed specifically for microwave decomposition, and then evaporated and dried while gradually increasing the temperature from 100°C→150°C→200°C→250°C on a hot plate. Next, 2 mL of hydrochloric acid (Ultrapur-100 ultra-high purity reagent, commercially available from Kanto Chemical Co., Inc.) and 3 mL of nitric acid (Ultrapur-100 ultra-high purity reagent, commercially available from Kanto Chemical Co., Inc.) were added, and the mixture was left for 1 hour and subjected to a microwave decomposition treatment under the following decomposition conditions. After microwave decomposition, insoluble components were filtered through ADVANTEC No.7 filter paper, the volume was then adjusted to 25 mL while washing with pure water, ICP atomic emission spectroscopy was performed under the following measurement conditions, and thus the content (mg/kg) of elemental sulfur in the copolymer was measured. If the content was outside the calibration curve range, the sample was additionally diluted and measured.

### (Microwave decomposition conditions)

·Decomposition device= microwave device "MARS5" (commercially available from CEM)
·Container used=XP1500 Plus container
·Decomposition condition=Stage 1 (an output of 400 W, a power of 100%, a pressure of 150 psi, a heating time of 10 min, a temperature of 120°C, and a retention time of 15 min)
   Stage 2 (an output of 400 W, a power of 100%, a pressure of 200 psi, a heating time of 10 min, a temperature of 150°C, and a retention time of 15 min)
   Stage 3 (an output of 400 W, a power of 100%, a pressure of 250 psi, a heating time of 10 min, a temperature of 180°C, and a retention time of 15 min)
   Stage 4 (an output of 400 W, a power of 100%, a pressure of 350 psi, a heating time of 15 min, a temperature of 205°C, and a retention time of 20 min)

### (Measurement conditions for ICP atomic emission spectroscopy)

·Measurement device="ICPE-9000" Multi-type ICP Optical Emission Spectrometer (commercially available from Shimadzu Corporation)
·Element measured =elemental sulfur (182.037 nm)
·Observation direction=axial direction
·High-frequency output=1.20 kW
·Carrier flow rate=0.7 L/min
·Plasma flow rate=10.0 L/min
·Auxiliary flow rate=0.6 L/min
·Exposure time=30 seconds
·Standard solution for calibration curves=US SPEX "XSTC-13" general-purpose mixed standard solution 31 element mixture (base 5% HNO₃)-about 10 mg/L of each element, and US SPEX "XSTC-8" general-purpose mixed standard solution 13 element mixture (base H₂O/trace HF)-about 10 mg/L of each element

The standard solution for calibration curves was diluted with ultrapure water to prepare standard solutions of 5 ppm, 2.5 ppm, 1 ppm and 0.25 ppm, and measurement was performed.

### (Example 1)

In a glass container, 2.57 g of polyethylene glycol monoacrylate ("BLEMMER AE-200," n≒4.5, 272.3 g/mol, commercially available from NOF Corporation) as the monomer (a), 0.10 g of dopamine methacrylamide (DMA) (221.3 g/mol, commercially available from Tokyo Chemical Industry Co., Ltd.) as the monomer (b), 0.027 g of 3-mercapto-1,2-propanediol ("1-thioglycerol," commercially available from Asahi Chemical Co., Ltd.) as a chain transfer agent, 0.015 g of 2,2'-azobis(2,4-dimethylvaleronitrile) ("V-65," commercially available from FUJIFILM Wako Pure Chemical Corporation) as a polymerization initiator, 8.89 g of tetrahydrofuran (THF) as an organic solvent, and 7.89 g of ethanol as an organic solvent were mixed and dissolved at room temperature using a vortex mixer. Next, the inside of the container was purged with nitrogen and polymerization was performed in a glove box at 55°C for 24 hours. After the polymerization, the copolymer was purified by reprecipitation in hexane, and the purified copolymer was dried in a vacuum oven ("vacuum oven LHV-112," commercially available from Espec Corporation) under vacuum conditions at 70°C for 16 hours. The dried copolymer was subjected to the above measurements and evaluations.

### (Example 2)

A copolymer was produced in the same method as in Example 1 except that the amount of BLEMMER AE-200 used was 2.45 g, and the amount of DMA used was 0.21 g. The produced copolymer was subjected to the above measurements and evaluations. In addition, the content of elemental sulfur measured by the elemental sulfur content measurement method was 2,300 mg/kg.

### (Example 3)

A copolymer was produced in the same method as in Example 1 except that the amount of BLEMMER AE-200 used was 2.18 g, the amount of DMA used was 0.42 g, and the amount of 1-thioglycerol used was 0.026 g. The produced copolymer was subjected to the above measurements and evaluations.

### (Example 4)

A copolymer was produced in the same method as in Example 1 except that the amount of BLEMMER AE-200 used was 1.91 g, the amount of DMA used was 0.66 g, and the amount of 1-thioglycerol used was 0.026 g. The produced copolymer was subjected to the above measurements and evaluations.

### (Example 5)

A copolymer was produced in the same method as in Example 1 except that 5.85 g of polyethylene glycol monoacrylate ("BLEMMER AE-400," n≒10,514.6 g/mol, commercially available from NOF Corporation) was used as the monomer (a), the amount of DMA used was 0.08 g, the amount of 1-thioglycerol used was 0.089 g, the amount of V-65 used was 0.134 g, the amount of THF used was 15.7 g, and the amount of isopropanol used was 15.7 g. The produced copolymer was subjected to the above measurements and evaluations.

### (Example 6)

A copolymer was produced in the same method as in Example 1 except that the amount of BLEMMER AE-400 used was 5.75 g, the amount of DMA used was 0.20 g, the amount of 1-thioglycerol used was 0.089 g, the amount of V-65 used was 0.134 g, the amount of THF used was 15.7 g, and the amount of isopropanol used was 15.7 g. The produced copolymer was subjected to the above measurements and evaluations.

### (Example 7)

A copolymer was produced in the same method as in Example 1 except that the amount of BLEMMER AE-400 used was 5.35 g, the amount of DMA used was 0.58 g, the amount of 1-thioglycerol used was 0.089 g, the amount of V-65 used was 0.134 g, the amount of THF used was 15.7 g, and the amount of isopropanol used was 15.7 g. The produced copolymer was subjected to the above measurements and evaluations.

### (Example 8)

A copolymer was produced in the same method as in Example 1 except that the amount of BLEMMER AE-400 used was 5.00 g, the amount of DMA used was 0.92 g, the amount of 1-thioglycerol used was 0.089 g, the amount of V-65 used was 0.134 g, the amount of THF used was 15.7 g, and the amount of isopropanol used was 15.7 g. The produced copolymer was subjected to the above measurements and evaluations.

### (Example 9)

A copolymer was produced in the same method as in Example 1 except that 1.77 g of 2-acryloyloxyethyl acid phosphate ("Light Acrylate P-1A(N)," 196.1 g/mol, commercially available from Kyoeisha Chemical Co., Ltd.) was used as the monomer (a), the amount of DMA used was 0.21 g, the amount of 1-thioglycerol used was 0.069 g, the amount of V-65 used was 0.030 g, and only 15.8 g of ethanol was used as the organic solvent. The produced copolymer was subjected to the above measurements and evaluations.

### (Example 10)

A copolymer was produced in the same method as in Example 1 except that 2.18 g of BLEMMER AE-200 was used, 0.52 g of polyethylene glycol monoacrylate ("BLEMMER AE-400," n≒10,514.6 g/mol, commercially available from NOF Corporation) was used, the amount of DMA used was 0.21 g, and the amount of 1-thioglycerol used was 0.145 g. The produced copolymer was subjected to the above measurements and evaluations.

### (Example 11)

A copolymer was produced in the same method as in Example 1 except that the amount of BLEMMER AE-200 used was 2.45 g, the amount of DMA used was 0.21 g, and the amount of 1-thioglycerol used was 0.0013 g. The produced copolymer was subjected to the above measurements and evaluations.

### (Example 12)

A copolymer was produced in the same method as in Example 1 except that the amount of BLEMMER AE-200 used was 2.45 g, the amount of DMA used was 0.21 g, and the amount of 1-thioglycerol used was 0.213 g. The produced copolymer was subjected to the above measurements and evaluations.

### (Comparative Example 1)

In a glass container, 1.91 g of 2-methoxyethyl acrylate (130.1 g/mol) as the monomer, 0.61 g of DMA as the monomer (b), 0.042 g of azobisisobutyronitrile ("AIBN" commercially available from Tokyo Chemical Industry Co., Ltd.) as a polymerization initiator, and 10 g of N,N-dimethylformamide (DMF) as an organic solvent were mixed and dissolved at room temperature using a vortex mixer. Next, the inside of the container was purged with nitrogen, and polymerization was performed in a glove box at 60°C for 19 hours. After the polymerization, the copolymer was purified by reprecipitation in hexane, the purified copolymer was dried using a vacuum oven under vacuum conditions at 70°C for 16 hours. The dried copolymer was subjected to the above measurements and evaluations. Since the copolymer obtained in Comparative Example 1 was insoluble in water, its dispersibility could not be measured.

### (Comparative Example 2)

In a glass container, 1.78 g of N,N-dimethylacrylamide (99.1 g/mol) as the monomer, 0.21 g of DMA as the monomer (b), 0.020 g of 1-thioglycerol as a chain transfer agent, 0.015 g of V-65 as a polymerization initiator, and 17.8 g of tetrahydrofuran (THF) as an organic solvent were mixed and dissolved at room temperature using a vortex mixer. Next, the inside of the container was purged with nitrogen, and polymerization was performed in a glove box at 55°C for 24 hours. After the polymerization, the copolymer was purified by reprecipitation in hexane, and the purified copolymer was dried using a vacuum oven under vacuum conditions at 70°C for 16 hours. The dried copolymer was subjected to the above measurements and evaluations. Since the copolymer obtained in Comparative Example 2 was insoluble in water, its dispersibility could not be measured.

The following Test Examples 1 to 3 were performed using the copolymers obtained in Example 2 and Example 6. In Test Examples 1 to 3, when the measured average particle size of the dispersion was in a range of 200 nm or more and 350 nm or less, it was evaluated that the dispersion could be dispersed with the primary particle size. On the other hand, when the measured average particle size of the dispersion was a value larger than 350 nm, it was evaluated that the dispersion was aggregated.

### (Test Example 1)

A dispersion (the solid content concentration of PTFE particles=29.3 mass%) was obtained in the same method as the dispersibility evaluation method except that the amount of deionized water used was changed to 13.5 g, the amount of PTFE particles used was changed to 6 g, the amount of the surfactant used was changed to 0.85 g, and the amount of the copolymer obtained in Example 2 used was changed to 0.12 g. The average particle size of the obtained dispersion was measured using the same device and measurement conditions as in the above dispersibility evaluation method. Since the measured average particle size of the dispersion was 277 nm, it was confirmed that the dispersion could be dispersed with the primary particle size.

### (Test Example 2)

A dispersion (the solid content concentration of PTFE particles=29.3 mass%) was obtained in the same method as the dispersibility evaluation method except that the amount of deionized water used was changed to 13.5 g, the amount of PTFE particles used was changed to 6 g, the amount of the surfactant used was changed to 0.85 g, and the amount of the copolymer obtained in Example 6 used was changed to 0.12 g. The average particle size of the obtained dispersion was measured using the same device and measurement conditions as in the above dispersibility evaluation method. Since the measured average particle size of the dispersion was 277 nm, it was confirmed that the dispersion could be dispersed with the primary particle size.

### (Test Example 3)

A dispersion (the solid content concentration of PTFE particles=50 mass%) was obtained in the same method as the dispersibility evaluation method except that the amount of deionized water used was changed to 13.2 g, the amount of PTFE particles used was changed to 15 g, the amount of the surfactant used was changed to 1.5 g, and the amount of the copolymer obtained in Example 6 used was changed to 0.30 g. The average particle size of the obtained dispersion was measured using the same device and measurement conditions as in the above dispersibility evaluation method. Since the measured average particle size of the dispersion was 256 nm, it was confirmed that the dispersion could be dispersed with the primary particle size.

Table 1 shows the results of the examples and comparative examples. In Table 1, the monomer (a) is a "monomer (a) having a hydrophilic group (excluding a catechol group)" and the monomer (b) is a "monomer (b) having a catechol group."

**[Table 1-1]**

| | | | Molar mass (g/mol) | Unit | Ex.1 | Ex.2 | Ex.3 | Ex.4 | Ex.5 | Ex.6 | Ex.7 |
|---|---|---|---|---|---|---|---|---|---|---|---|
| Proportion of number of moles of DMA with respect to total number of moles of monomers used | | | - | mol% | 5 | 10 | 19 | 30 | 3 | 7 | 20 |
| Monomer (b) | | dopamine methacrylamide (DMA) | 221.3 | g | 0.10 | 0.21 | 0.42 | 0.66 | 0.08 | 0.20 | 0.58 |
| Monomer (a) | hydrophilic group= hydroxyl group | polyethylene glycol monoacrylate ("BLEMMER AE-200," n≒4.5) | 272.3 | g | 2.57 | 2.45 | 2.18 | 1.91 | - | - | - |
| | hydrophilic group= hydroxyl group | Polyethylene glycol monoacrylate ("BLEMMER AE-400,"n≒10) | 514.6 | g | - | - | - | - | 5.86 | 5.75 | 5.35 |
| | hydrophilic group= phosphate group | 2-acryloyloxyethyl acid Phosphate "Light acrylate P-1A (N)" | 196.1 | g | - | - | - | - | - | - | - |
| Monomer | 2-methoxyethyl acrylate | | 130.1 | g | - | - | - | - | - | - | - |
| | N,N-dimethylacrylamide | | 99.1 | g | - | - | - | - | - | - | - |
| Chain transfer agent | 3-mercapto-1,2-propanediol "1-thioglycerol" | | - | g | 0.027 | 0.027 | 0.026 | 0.026 | 0.089 | 0.089 | 0.089 |
| Polymerization initiator | 2,2'-azobis(2,4-dimethylvaleronitrile) "V-65" | | - | g | 0.015 | 0.015 | 0.015 | 0.015 | 0.134 | 0.134 | 0.134 |
| | azobisisobutyronitrile "AIBN" | | - | g | - | - | - | - | - | - | - |
| Organic solvent | tetrahydrofuran (THF) | | - | g | 8.89 | 8.89 | 8.89 | 8.89 | 15.7 | 15.7 | 15.7 |
| | ethanol | | - | g | 7.89 | 7.89 | 7.89 | 7.89 | - | - | - |
| | isopropanol | | - | g | - | - | - | - | 15.7 | 15.7 | 15.7 |
| | N,N-dimethylformamide (DMF) | | - | g | - | - | - | - | - | - | - |
| Polymerization conditions | temperature | | - | °C | 55 | 55 | 55 | 55 | 55 | 55 | 55 |
| | time | | - | h | 24 | 24 | 24 | 24 | 24 | 24 | 24 |
| Solubility evaluation result | | | - | - | ○ | ○ | ○ | Δ | ○ | ○ | ○ |
| Number average molecular weight | | | - | - | 7057 | 6792 | 6960 | 6166 | 7024 | 6874 | 6418 |
| Mass average molecular weight | | | - | - | 9400 | 8688 | 8340 | 7151 | 10644 | 11393 | 10231 |
| Average particle size of dispersion measured by dispersibility evaluation method | | | - | nm | 274 | 287 | 266 | 285 | 280 | 286 | 273 |

**[Table 1-2]**

| | | | Molar mass (g/mol) | Unit | Ex. 8 | Ex. 9 | Ex.10 | Ex. 11 | Ex. 12 | Comp. Ex. 1 | Comp. Ex. 2 |
|---|---|---|---|---|---|---|---|---|---|---|---|
| Proportion of number of moles of DMA with respect to total number of moles of monomers used | | | - | mol% | 30 | 10 | 10 | 10 | 10 | 16 | 5 |
| Monomer (b) | | dopamine methacrylamide (DMA) | 221.3 | g | 0.92 | 0.21 | 0.21 | 0.21 | 0.21 | 0.61 | 0.21 |
| Monomer (a) | hydrophilic group= hydroxyl group | polyethylene glycol monoacrylate ("BLEMMER AE-200," n≒4.5) | 272.3 | g | - | - | 2.18 | 2.45 | 2.45 | - | - |
| | hydrophilic group= hydroxyl group | Polyethylene glycol monoacrylate ("BLEMMER AE-400,"n≒10) | 514.6 | g | 5.00 | - | 0.52 | - | - | - | - |
| | hydrophilic group= phosphate group | 2-acryloyloxyethyl acid Phosphate "Light acrylate P-1A (N)" | 196.1 | g | - | 1.77 | - | - | - | - | - |
| Monomer | 2-methoxyethyl acrylate | | 130.1 | g | - | - | - | - | - | 1.91 | - |
| | N,N-dimethylacrylamide | | 99.1 | g | - | - | - | - | - | - | 1.78 |
| Chain transfer agent | 3-mercapto-1,2-propanediol "1-thioglycerol" | | - | g | 0.089 | 0.069 | 0.145 | 0.0013 | 0.213 | - | 0.020 |
| Polymerization initiator | 2,2'-azobis(2,4-dimethylvaleronitrile) "V-65" | | - | g | 0.134 | 0.030 | 0.015 | 0.015 | 0.015 | - | 0.015 |
| | azobisisobutyronitrile "AIBN" | | - | g | - | - | - | - | - | 0.042 | - |
| Organic solvent | tetrahydrofuran (THF) | | - | g | 15.7 | - | 8.89 | 8.89 | 8.89 | - | 17.8 |
| | ethanol | | - | g | - | 15.8 | 7.89 | 7.89 | 7.89 | - | - |
| | isopropanol | | - | g | 15.7 | - | - | - | - | - | - |
| | N,N-dimethylformamide (DMF) | | - | g | - | - | - | - | - | 10 | - |
| Polymerization conditions | temperature | | - | °C | 55 | 55 | 55 | 55 | 55 | 60 | 55 |
| | time | | - | h | 24 | 24 | 24 | 24 | 24 | 19 | 24 |
| Solubility evaluation result | | | - | - | ○ | ○ | ○ | ○ | ○ | × | × |
| Number average molecular weight | | | - | - | 5527 | 8086 | 4218 | 8068 | 2864 | 66383 | 4325 |
| Mass average molecular weight | | | - | - | 7519 | 9484 | 5884 | 10404 | 3902 | 363006 | 7132 |
| Average particle size of dispersion measured by dispersibility evaluation method | | | - | nm | 268 | 294 | 269 | 268 | 304 | not measurable | not measurable |

## Claims

1. A copolymer comprising a structural unit (A) derived from a monomer (a) having a hydrophilic group (excluding a catechol group) and a structural unit (B) derived from a monomer (b) having a catechol group,
wherein the hydrophilic group is a hydroxyl group and/or a phosphate group, and
the mass average molecular weight is 500 or more and 20,000 or less.

2. The copolymer according to claim 1, wherein the monomer (a) is a monomer represented by the following Formula (1): 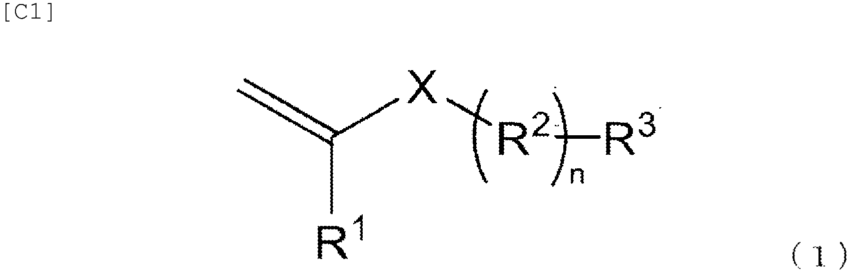
(in the formula, R¹ is a hydrogen atom or a linear or branched alkyl group having 1 to 20 carbon atoms,
X is an amide bond (-C(O)NH- or -NHC(O)-), or an ester bond (-C(O)O- or -OC(O)-),
R² is a single bond, a linear or branched alkylene group having 1 to 10 carbon atoms which may have a substituent, or a linear or branched oxyalkylene group having 1 to 10 carbon atoms which may have a substituent,
n is a number from 1 or more and 20 or less on average, when R² is a single bond or a linear or branched alkylene group having 1 to 10 carbon atoms which may have a substituent, R³ is a hydroxyl group or a phosphate group, and
when R² is a linear or branched oxyalkylene group having 1 to 10 carbon atoms which may have a substituent, R³ is a hydrogen atom, a hydroxyl group, or a phosphate group).

3. The copolymer according to claim 1, wherein the monomer (b) is a monomer represented by the following Formula (2): 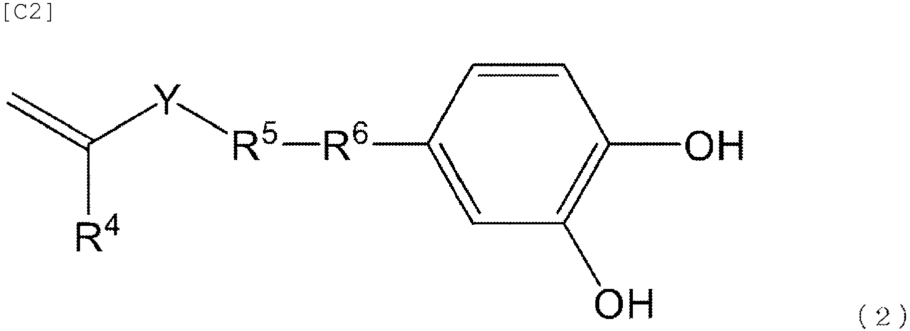
(in the formula, R⁴ is a hydrogen atom or a linear or branched alkyl group having 1 to 20 carbon atoms,
Y is an amide bond (-C(O)NH- or -NHC(O)-), or an ester bond (-C(O)O- or -OC(O)-),
R⁵ is a single bond or a linear or branched alkylene group having 1 to 10 carbon atoms which may have a substituent, and
R⁶ is a single bond, an ether bond (-O-), -CH(OH)-, an ester bond (-C(O)O- or -OC(O)-), or a carbonate group (-OC(O)O-)).

4. A composite particle, comprising:
the copolymer according to any one of claims 1 to 3; and
particles having a surface free energy of less than 70 mJ/m²,
wherein the copolymer is adhered to the surface of the particle.

5. The composite particle according to claim 4, further comprising a surfactant,
wherein the surfactant is adhered to the surface of the particle.

6. A composite particle dispersion, comprising:
the composite particle according to claim 4; and
an aqueous solvent,
wherein the composite particle is dispersed in the aqueous solvent.

7. A composite particle dispersion, comprising:
the composite particle according to claim 5; and
an aqueous solvent,
wherein the composite particle is dispersed in the aqueous solvent.

8. A method of producing the copolymer according to any one of claims 1 to 3, comprising
a step of copolymerizing the monomer (a) and the monomer (b) in the presence of a chain transfer agent.

9. A dispersing agent comprising the copolymer according to any one of claims 1 to 3.

10. A coating agent comprising the copolymer according to any one of claims 1 to 3.

11. A paint comprising the copolymer according to any one of claims 1 to 3.

12. A lubricating film comprising the copolymer according to any one of claims 1 to 3.

13. A battery comprising the copolymer according to any one of claims 1 to 3.
